# EUROPEAN PATENT APPLICATION

(11) **EP 0 615 366 A1**
(43) Date of publication of application: **14.09.1994**
(21) Application number: 94200626.3
(22) Date of filing: 10.03.1994
(51) Int. Cl.: H04L 12/40

(54) **Method and system for accessing a communication medium for asynchronous transmission**

(30) Priority: 11.03.1993 NL 9300441
(71) Applicant: ERICSSON RADIO SYSTEMS B.V., 7814 VA Emmen (NL)
(72) Inventor: Mink, Roelof, NL-7826 EM Emmen (NL); Tuinstra, Johan Dirk, NL-7827 CA Emmen (NL)
(74) Representative: van der Arend, Adrianus G.A., Ir.

(57) **Abstract**

The message to be transmitted consists of one or more transmission words which each consist of, in the sequence of transmission, a start section, a data word of a certain number of bits and a stop section. At rest, the link is in a first state. During transmission of the start section, the link is set to a second state, and during transmission of the stop section the transmission is set to the first state. For each bit of the data word, the link is set, depending on the logical level of the bit, to the first state or the second state. Each station monitors the state of the link and refrains from transmission if the station detects an occupied state as a result of a transmission by another station of the link.

## Description

The invention relates to a method for safeguarding the integrity of data in the case of asynchronous transmission over a link which is common to more than two transmitting/receiving stations, a message to be transmitting consisting of one or more transmission words which each consist of, in the sequence of transmission, a start section, a data word of a certain number of bits, and a stop section, the link at rest being in a first state, during transmission of the start section the link being in a second state, during transmission of the stop section the link being in the first state, and for each bit of the data word the link being set, depending on the logical level of the bit, to the first state or the second state.

A method of the abovementioned type is known in practice. The two states of the link can be represented, for example, by two different voltage levels or two different audio frequencies. The lengths of the start section and of the stop section are equal, for example, to the duration of the transmission of one bit. The RS485 bus, for example, is such a link where the two states are different voltage levels of the link.

The known method has the drawback that without special measures collision may take place on the link, that is to say that two or more transmitting/receiving stations may transmit simultaneously, which in general results in corruption of the transmission words sent, owing to which these cannot be received correctly, resulting in communication from each of the transmitting stations failing. In the known method, the special measures taken consist, for example, of the use of a master station, the other stations being slave stations and the master station interrogating the slave stations in turn whether they wish to transmit. If a polled slave station wishes to transmit, said slave station reports this to the master station, whereupon said slave station may engage the link for transmission of data to another station. The time during which the slave station may occupy the link for a transmission to another station may be a predetermined fixed time or a variable time which has to be stated in advance and depends on the length of the message to be transmitted. After said time has elapsed, the master station may continue with the cyclic polling of the slave stations. The special measures to be taken with the known method may also consist of granting in turn to the stations permission for transmission, where said permission may consist of a token. If a station has received such a token and it does not wish to transmit information, it sends said token to the next station.

The known method has the drawback that it requires relatively complicated measures for supporting the integrity of the transfer of data in the case of asynchronous transmission via a common link by means of which more than two transmitting/receiving stations are linked. Furthermore, a station going down owing to a fault or other causes could lead to problems whose prevention makes said measures even more complicated. Consequently, implementation of the known method is also expensive.

The object of the invention is to overcome the drawbacks of the known method.

This object is achieved for the method of the type referred to in the preamble by each station monitoring the state of the link and refraining from transmitting if the station detects an occupied state of the link as a result of a transmission by another station and the station is not authorized to perform a response transmission. As a result, each station is able to detect, from the moment when a transmission via the link commences, said occupied state and to postpone any transmission by itself. As a result, each station is able to decide autonomously whether it wishes to occupy the link, and no master station is required for managing occupation of the link by the other stations. If a station, for whatever reason, goes down, this does not affect the decision of another station of being able to occupy the link.

The method is preferably characterized in that if a station finds that the link is in the second state, it starts, for itself, an interval of occupation of a longer duration than the transmission duration of a transmission word, or restarts if the interval of occupation is already running, and the current interval of occupation indicates the occupied state. This ensures in a simple manner that the transmission by a station is postponed for a sufficiently long time if the link is already occupied.

The method is preferably characterized in that there is assigned to each station a unique address, a first station which commences a communication with a second station, incorporates the address of the second station as a destination address in a first message, the second station is authorized to perform a transmission in a reaction interval which follows the transmission by the first station of the first message, the reaction interval terminating, at the latest, with the termination of the interval of occupation, and the first station deciding that the communication has taken place correctly if the first station receives back a valid second message which commences within the reaction interval. As a result, each station which, at a given moment, operates as a first station is able to transmit a first message destined for a specific second station, and said second station, during the reaction interval, is the only station with permission to transmit a second message in response to the first message. If the first station does not receive back a valid second message which commences within the reaction interval, the communication to the second station was faulty. The validity of the second message may depend on a fault occurring during transmission of the second message or of the information content of the second message prior to transmission, for example a sender address stated in the second message according to a further refinement of the invention. If the first station was expecting back a second message but did not receive it in time, i.e. commencing within the reaction interval, and/or if a second message received back is found to be invalid, the first station judges the communication between the first and second station not to have taken place correctly. In general, every time two different stations transmit simultaneously, no second message which is valid and/or commences in time will be received back, so that the first station will detect said faulty communication and will react in a suitable manner.

Preferably, a first station repeats a transmission of a first message if it does not receive, within a predetermined time, in particular within the reaction interval following the last transmission, a second message, each station having a different delay time for repeating the transmission.

Moreover, the method preferably is characterized in that each message contains the address of the transmitting station, the second message contains a destination address, and the first station, upon receiving a second message destined for the first station, decides that the communication has taken place correctly if it finds that the destination address of the first message is identical with the sender address of the second message. As a result, each message contains a destination address and a sender address, so that a first station which, after transmitting a first message, receives back a second message destined for said station, is able to check whether the second message originates from the correct second station, namely carrying the destination address of the first message. Moreover, since the second message contains only one destination address, this prevents, in the case of two or more first stations simultaneously transmitting first messages, in particular having identical destination addresses and being of identical duration, more than one of said first stations receiving back a second message with a correct destination address, so that the other first stations having addresses different from the destination address of the second message will judge the communication to be incorrect.

Other properties and advantages of the invention will become apparent from the explanation following hereinafter with reference to the accompanying drawings, in which:
Figure 1 shows a schematic of a number of stations and a common communication link;
Figure 2 shows a schematic of an embodiment of a station shown in Figure 1;
Figure 3 shows a timing diagram to illustrate the operation of the diagram of Figure 2;
Figure 4 shows a schematic of another embodiment of a station shown in Figure 1; and
Figure 5 shows a timing diagram to illustrate the operation of the diagram of Figure 4.

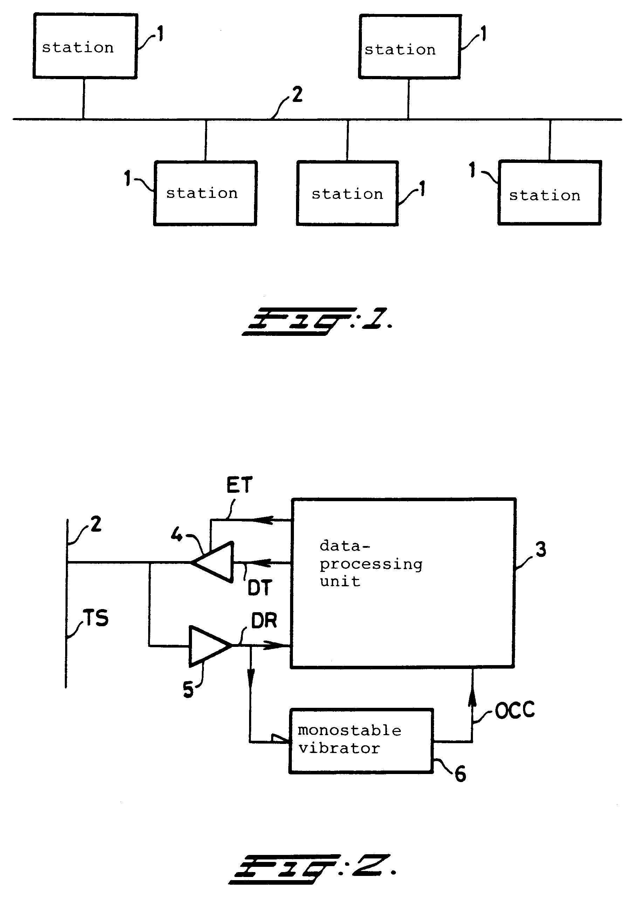

Figure 1 shows a diagram of a system of a number of transmitting/receiving stations 1, which are linked to one another by means of a common communication link 2. Each station 1 is suitable for asynchronously transmitting a message via the link 2 and for receiving a message. A message consists of one or more transmission words which each consist of, in the sequence of transmission, a start section, a data word of a certain number of bits, and a stop section. For each bit of a data word to be transmitted, a sending station 1, depending on the logical level of the bit, sets the link 2 to a first state or a second state. At rest and during transmission of a stop section, the link 2 is set to the first state. During transmission of a start section, the link 2 is set to the second state. The two different states of the link 2 may be represented by, for example, two different tone frequencies or by two different voltage levels. In the latter case, the link 2 can be an RS485 link, where the start section has a length of one bit and the stop section can have a length of one or two bits. Although the start and stop sections, when the method according to the invention is used, may each be of arbitrary length, it is assumed hereinafter that the link 2 is an RS485 link and the stop section has a length of one bit.

The object of the invention is to prevent two different stations from simultaneously transmitting a message, thus preventing the occurrence of interference of simultaneous transmissions and one or more, probably all, of the simultaneous transmissions from being received incorrectly.

In order to achieve this objective, each station 1 monitors the state of the link 2 and refrains from transmitting if the station 1 finds that a transmission via the link 2 already being taken place.

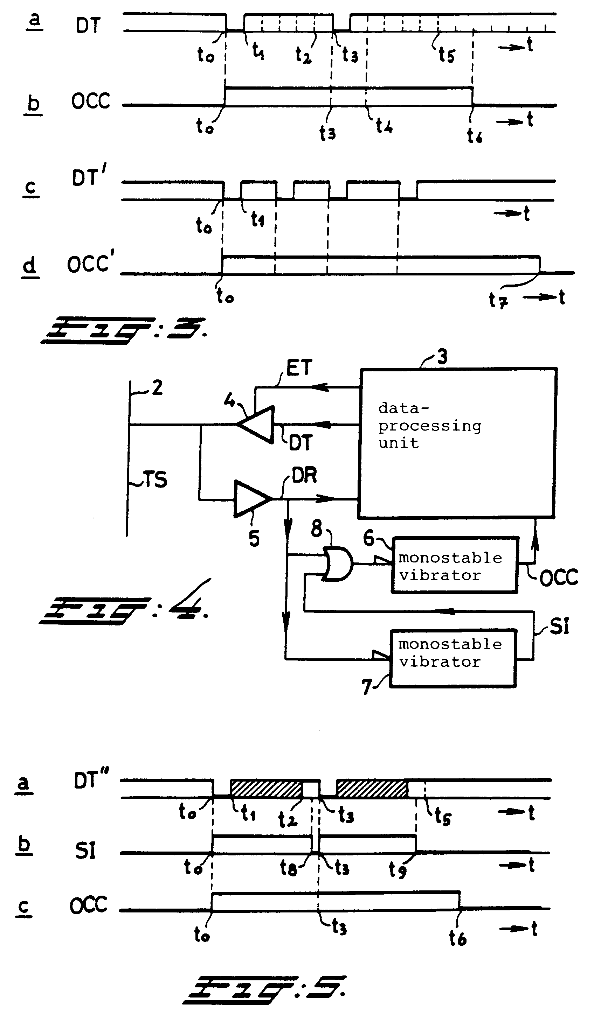

Figure 2 shows a diagram of an embodiment of a station 1. According to Figure 2, a station 1 comprises a data-processing unit 3, a transmitter circuit 4, a reception circuit 5 and a monostable multivibrator 6. The data-processing unit 3 is suitable for supplying an enable transmission signal ET and a serial data transmission signal DT to inputs of the transmitter circuit 4. In addition, the data-processing unit 3 is suitable for receiving, at the output of the reception circuit 5, a serial data reception signal DR. The data-processing unit 3 is furthermore suitable for receiving an output signal OCC from the output of the monostable multivibrator 6. The output of the transmitter circuit 4 and the input of the reception circuit 5 are connected to the link 2. The output of the reception circuit 5 is further connected to a trigger input of the monostable multivibrator 6. Every time the monostable multivibrator 6 receives a falling edge of the signal DR on its trigger input, the vibrator 6 sets the output signal OCC high for the time required for transmitting a transmission word.

A signal transmitted by the link 2 is hereinafter referred to as transmission signal TS.

The mode of operation of the schematic of Figure 2 is explained hereinafter with reference to the timing diagram of Figure 3, in which Figure 3a represents an example of the data transmission signal DT, Figure 3b represents the output signal OCC of the vibrator 6 during transmission of the signal DT, Figure 3c represents another example of a data transmission signal DT', and Figure 3d represents the output signal of the vibrator 6 OCC' during transmission of the signal DT'. In Figure 3, and subsequently also in Figure 5, the proportions of the transmission durations of start and stop sections and of data words are chosen in such a way that the start and stop sections each have a length of one bit and each data word has a length of four bits. In reality, other numbers can be used.

At rest, i.e. in the first state of the link 2, the transmission signal TS via the link 2 has a high level. For the sake of clarity this has also been assumed hereinafter for the data transmission signal DT. If the link 2 is free, which is detected in a manner explained hereinafter, the data-processing unit 3 is able to transmit the data transmission signal DT. To this end, the unit 3 sets the enable signal ET to such a level that the transmitter circuit 4 lets the data transmisison signal DT pass through. The transmission signal TS via the link 2 then becomes identical to the data transmission signal DT. Figure 3a shows an example of a data transmission signal DT and of the transmission signal TS, if let through, consisting of two transmission words of which the first commences at a time t₀ with a low level of the start section which lasts until the time t₁. This is followed by a data word of which all four bits are high. The high level is maintained during the stop bit of the transmission word beginning at the time t₂, until the beginning at the time t₃ of the following transmission word, which is identical to the first transmission word. The stop section of the second transmission word ends at the time t₅, whereafter the link 2 is again at rest and maintains the high level.

The data reception signal DR supplied by the reception circuit 5 to the processing unit 3 is identical to the transmission signal TS via the link 2 and therefore, in the example, to the data transmission signal DT. If the data reception signal DR goes from a high level to a low level, the monostable multivibrator 6 is triggered, as a result of which the output signal OCC thereof becomes high. The signal OCC remains high during the interval predetermined by the monostable multivibrator 6. The monostable multivibrator 6 is set in such a way that the interval with the high level of the signal OCC lasts longer than the time required for transmitting a transmission word. The interval time is based on and at least equal to the sum of the transmission time of a transmission word, the response time of a receiving station and the transmission transit time via the link. In the example shown in Figures 3a and 3b, the interval could then end at the time t₄. The monostable multivibrator 6 is restarted, however, each time it receives a falling edge at its trigger input, therefore also at the time t₃ at the beginning of the second transmission word. The interval for which the signal OCC is high therefore lasts until beyond the time t₄ at which the interval would end without restarting, namely until a time t₆ which is situated beyond the time t₃ by an amount of time equal to the duration of the interval. Since after the second transmission word the signal DT contains no further transmission word, at least not within the time for which the signal OCC is high, the signal OCC may be regarded as a signal which indicates the occupied state of the link 2. Therefore, the signal OCC is hereinafter also referred to as occupation signal OCC.

During transmission of a signal TS via the link 2, each station 1 can generate an occupation signal OCC of the same shape. During the interval for which the occupation signal OCC is high, hereinafter referred to as interval of occupation, the processing unit 3 of a station 1 which is not transmitting, will in general not supply a data transmission signal DT and will disable the transmitter circuit 4 by means of a suitable level of the transmission enable signal ET. Only when the interval of occupation has elapsed and the occupation signal OCC is low, does this indicate to the last-mentioned processing unit 3 that it may supply a data transmission signal DT and may enable the transmitter circuit 4. Only a station for which a current received message is destined is entitled, after that message has elapsed and while OCC is still high, to transmit a message, as a result of which OCC remains high and transmission by other stations continues to be suppressed.

In the example of Figure 3c, each data word to be transmitted of the signal DT' has bits of different levels. Since the multistable multivibrator 6 restarts at each falling edge, the interval of occupation of occupied signal OCC' will be of longer duration than in the previous example, namely at most until time t₇.

Figure 4 shows a schematic of a station 1 in which an interval of occupation of an occupied signal OCC always ends after a predetermined time after transmission of the last data word of a transmission signal TS. As a result, the communication capacity of the link 2 can be utilized more effectively.

With respect to the schematic of Figure 2, the schematic of Figure 4 has been extended by another monostable multivibrator 7 and an OR gate 8. The monostable vibrator 7 is of a type which cannot be restarted while a started interval thereof is still running. The monostable multivibrator 7 receives the data reception signal DR on a trigger input and supplies, as the output signal, a start inhibit signal SI at an input of the OR gate, another input of which receives the data reception signal DR and whose output is connected to the trigger input of the vibrator 6. If the trigger input of the vibrator 7 receives a falling edge, the output signal SI thereof becomes high during a predetermined interval having a duration which is inbetween the transmission duration of a start section plus a data word and the transmission duration of a transmission word plus a start section.

Figure 5a shows an example of a data transmission signal DT'' of two transmission words, of which the bits of each data word may have different levels. In Figure 5a the data words are therefore indicated by hatched rectangles.

If a station 1 with an arrangement as shown in Figure 4 receives a transmission signal TS having the shape of the signal DT'', both monostable multivibrators 6 and 7 will start at the time t₀, as a result of which the start inhibit signal SI and the occupation signal OCC become high. As long as the start inhibit signal SI is high, the level at the output of the OR gate 8, irrespective of the value of the level of the data reception signal DR, will not change, and consequently the vibrator 6 cannot be restarted during said start inhibit interval. If the start inhibit interval ends with the high level of the signal SI, in Figure 5b at the time t₈, the output of the OR gate 8 is set from the high to the low level if the data reception signal DR is already low or becomes low thereafter. In the example of Figure 5, the monostable multivibrators 6 and 7 will therefore restart at the time t₃, at the beginning of the second transmission word. As a result, the following and at the same time last inhibit interval of the signal SI will then remain high until the time t₉, and the interval of occupation with the high level of the occupation signal OCC as shown in Figure 5c will end at the same time t₅ as shown in Figure 3b, at least for the abovementioned settings of the intervals of the vibrators 6 and 7.

The data-processing unit 3 of each station 1 preferably works with a program which is designed to enable the station 1 to operate in the manner explained hereinafter.

Beforehand, each station 1 has been assigned a unique address. For a first station which initiates a communication with a second station, the program incorporates the address of the second station in a first message to be transmitted by the first station.

In case two or more stations 1 want to transmit and, when the link 2 becomes free, simultaneously occupy the link 2 by supplying a data transmission signal DT to the link 2, interference of the different transmissions via the link 2 will take place, and as a result it is highly unlikely that the destination stations will recognize their address in the transmission mixed by interference. The program therefore comprises a step which, after reception of a message, i.e. when the address of the station in question has been recognized in the transmission via the link 2, sends back a message. In case said interference occurs and is such that not a single station replies in response thereto, the program contains the requirement that the transmission of a message expected back must commence within a reaction interval which ends before the interval of occupation of the occupation signal OCC after transmission of the first message ends. In an embodiment according to Figure 2, the reaction interval ends at the latest at the time t₇, and in the embodiment of Figure 4 at the latest at the time t₆. In case that, with the interference occurring as assumed, there is in fact a station which does answer, the program can be provided with the requirement that an answering station incorporate, in the answer to be transmitted, its own address as the sender address. The stations 1 which simultaneously began to transmit a message, will then either not receive an answer in time within the reaction interval, owing to a possible difference in the transmission duration of the different simultaneously transmitted messages, or receive an answer from an incorrect sender.

If a station 1 does not receive a message expected back after a transmission, or does not receive it in time or correctly, it repeats the transmission after a time interval has elapsed which, with a high probability, is very different for the different stations 1, and when the link is free. This prevents any repetition in the occurrence of said interference. Detection of the occurrence of a message sent back, via the data transmission signal DR, and the repetition of the transmission can be effected by the program in a simple manner. In so doing, the delay time can be generated afresh each time or can be a function of the address of the station in question, for example proportional to a value representing the address.

In an exceptional case, the said interference may arise as a result of two or more simultaneous transmissions of messages which all originate from different stations 1 and which are all destined for the same different station 1. If the messages then moreover are of the same duration, the address of the destination station need not be corrupted by interference and the destination station would therefore, in spite of the collision, still send back a message, which could lead, in all the stations 1 which just previously transmitted simultaneously, to the wrong decision that the communication had taken place correctly. In order to be able to cope even with these situations, the program preferably incorporates in each message to be transmitted both a destination address and a sender address. As a result, the program of a processing unit 3 of a first station 1 which, by means of a first message, has initiated a communication with a second station 1, can check whether a second message received back originates from the last-mentioned second station 1, on the basis of which the program can decide whether the communication has taken place correctly. Since the second message contains only a single destination address, only a single station can recognize its own address as the destination address of the transmitted second message. As a result of the assumed interference occurring, the last-mentioned station need not be one of the stations which transmitted simultaneously, in which situation all the stations which each, by transmitting a first message, initiated a communication, will judge that the communication has not taken place correctly. Even in case the different first messages transmitted simultaneously were of equal duration and the destination address of all these messages was the same, all the first stations which transmitted simultaneously, except for at most one, will judge that the communication has not taken place correctly.

The steps of the abovementioned program are considered to be sufficiently clear to those skilled in the art, after reading the above, so as to implement the invention without reference to additional schematics or flow charts.

## Claims

1. Method for safeguarding the integrity of data in the case of asynchronous transmission over a link which is common to more than two transmitting/receiving stations, a message to be transmitted consisting of one or more transmission words which each consist of, in the sequence of transmission, a start section, a data word of a certain number of bits, and a stop section, the link at rest being in a first state, during transmission of the start section the link being in a second state, during transmission of the stop section the link being in the first state, and for each bit of the data word the link being set, depending on the logical level of the bit, to the first state or the second state, **characterized in that** each station monitors the state of the link and refrains from transmitting if the station detects an occupied state of the link as a result of a transmission by another station and the station is not authorized to perform a response transmission.

2. Method according to claim 1, **characterized in that,** if a station finds that the link is in the second state, it starts, for itself, an interval of occupation of a longer duration than the transmission duration of a transmission word, or restarts if the interval of occupation is already running, and the current interval of occupation indicates the occupied state.

3. Method according to claim 2, **characterized in that** a restart of the interval of occupation is inhibited during a start inhibit interval, the duration of the start inhibit interval is longer than the transmission duration of a transmission word minus a stop section, the duration of the start inhibit interval is shorter than the transmission duration of a transmission word plus a start section, and the start inhibit interval commences at the same time as the starting or restarting of the interval of occupation.

4. Method according to claim 3, **characterized in that** there is assigned to each station a unique address, a first station which commences a communication with a second station, incorporates the address of the second station as a destination address in a first message, the second station is authorized to perform a transmission in a reaction interval which follows the transmission by the first station of the first message, the reaction interval terminating, at the latest, with the termination of the interval of occupation, and the first station deciding that the communication has taken place correctly if the first station receives back a valid second message which commences within the reaction interval.

5. Method according to claim 4, **characterized in that** a transmitting station determines for itself the interval of occupation and the reaction interval of this station terminates at the latest at the end of said interval of occupation.

6. Method according to claim 4 or 5, **characterized in that** if the first station, subsequent to the transmission of the first message commencing within the reaction interval does not receive a valid second message, the first station repeats the transmission of the first message after a delay interval following the reaction interval has elapsed, said delay interval having a high probability of being different for different stations.

7. Method according to claim 6, **characterized in that** the first station, prior to each occurrence of the delay interval, defines a random duration of the delay interval.

8. Method according to claim 6, **characterized in that** the delay interval is a function of the address of the first station.

9. Method according to any one of claims 4 to 8 inclusive, **characterized in that** each message contains the address of the transmitting station, the second message contains a destination address, and the first station, upon receiving a second message destined for the first station, decides that the communication has taken place correctly if it finds that the destination address of the first message is identical with the sender address of the second message.

10. Communication system containing a number of transmitting/receiving stations which are linked by means of a common link which is suitable for asynchronous transmission of messages between the stations, the system being suitable for use of a method according to any one of the preceding claims.
